# EUROPÄISCHE PATENTANMELDUNG

(11) **EP 1 783 482 A1**
(43) Veröffentlichungstag der Anmeldung: **09.05.2007**
(21) Anmeldenummer: 05024115.7
(22) Anmeldetag: 04.11.2005
(51) Int. Cl.: G01N 21/64, B24C 1/00, B24C 11/00, F01D 5/00, C09K 11/77, C09K 11/68

(54) **Verfahren zum Strahlen und ein Strahlmaterial**

(71) Anmelder: SIEMENS AKTIENGESELLSCHAFT, 80333 München (DE)
(72) Erfinder: Stamm, Werner, Dr., 45481 Mülheim an der Ruhr (DE); Wessler, Berit, Dr., 82024 Taufkirchen (DE)

(57) **Zusammenfassung**

Die Erfindung betrifft ein Verfahren zum Strahlen. Ein Bauteil wird einem Strahlverfahren unter Verwendung eines Strahlmaterials mit fluoreszierenden Eigenschaften unterzogen. Durch Aussetzung des Bauteils unter ultraviolettem Licht wird in die Oberfläche des Bauteils eingedrungenes Strahlmaterial sichtbar.

## Beschreibung

Die vorliegende Erfindung betrifft ein Verfahren zum Strahlen und ein Strahlmaterial, insbesondere ein Verfahren zum Aufrauen der Grundwerkstoffoberfläche, Abtragung und Glättung der Haftvermittlerschicht (MCrAlY-Schicht)sowie ein Strahlmaterial.

Bauteile, insbesondere Turbinenbauteile, sind während ihres Betriebs hohen Belastungen ausgesetzt und haben deshalb relativ hohe Verschleißerscheinungen. Da die Herstellung von Turbinenbauteilen jedoch in der Regel kostspielig ist, werden viele Bauteile repariert.

Viele Turbinenbauteile weisen zum Schutz ihres Grundkörpers zusätzliche Beschichtungen auf.
Bei der Reparatur von Bauteilen, insbesondere Gasturbinenbauteilen, wie z.B. Turbinenschaufeln, werden diese Beschichtungen, die zum Schutz vor Korrosion und/oder als Haftvermittler für Wärmedämmschichten dienen, zumindest durch teilweises Strahlen mit Strahlgut entfernt, bevor neue Beschichtungen aufgebracht werden. Als Strahlmaterial wird in der Regel das sehr harte Material Korund (Aluminiumoxid) verwendet. Dabei passiert es relativ häufig, dass Partikel des Strahlenmaterials in das relativ weiche Metall des Bauteils und/oder in die MCrAlY-Schicht eindringen und dort haften bleiben. Dies geschieht besonders leicht, wenn der Bauteilwerkstoff nach einiger Betriebsdauer an y'-Phase verarmt ist. Werden diese Fremdkörper vor der Neubeschichtung nicht entfernt, können sie im Betrieb als Startpunkt für die Delamination, also für ein Ablösen der Beschichtung, wirken und damit zum Versagen der Schutzschichten führen. Ein ähnliches Szenario kann auch entstehen, wenn Overlay- oder Haftvermittlerschichten für EBPVD-Schichten durch Strahlen geglättet werden. Auch bei der Neuteilfertigung wird insbesondere bei der HVOF-Beschichtung die Oberfläche des Grundwerkstoffs vor dem Beschichten aufgeraut. Strahlmaterialrückstände können zu einer Verringerung der Haftung führen.

Bisher wird das Problem der Strahlmaterialrückstände dadurch gelöst, dass metallographische Schliffe der entsprechenden Bauteile geprüft werden. Wegen der aufwendigen Präparation und der Notwendigkeit, dafür Bauteile zu zerstören, ist diese Kontrolle aber sehr kostenintensiv und zeitaufwändig. Bei der eigentlichen Produktion kann der Strahlmaterialrückstand nicht bestimmt werden und man muss sich auf die Reproduzierbarkeit des Prozesses verlassen.

Aufgabe der vorliegenden Erfindung ist es daher, ein Verfahren zum Strahlen zur Verfügung zu stellen, durch das die vorstehend beschriebenen Nachteile überwunden werden können

Diese Aufgabe wird erfindungsgemäß durch ein Verfahren zum Strahlen gemäß Anspruch 1 gelöst.

Eine weitere Aufgabe der vorliegenden Erfindung ist es, ein Strahlmaterial anzugeben, durch das die vorstehend beschriebenen Nachteile überwunden werden können.

Diese Aufgabe wird durch ein Strahlmaterial gemäß Anspruch 15 gelöst.

Der Erfindung liegt die Erkenntnis zugrunde, dass sich das in die Oberfläche eines Bauteils eingedrungene Strahlmaterial mit lumineszierenden Eigenschaften, also phosphoreszierenden oder vorzugsweise fluoreszierenden Eigenschaften, bei Beleuchten mit einer die Lumineszenz anregenden Beleuchtung gut von der dunklen Umgebung abhebt und somit leicht erkannt werden kann, selbst wenn nur ein kleiner Teil nicht von dem Metall des Bauteils bedeckt ist. Die Erfindung zeichnet sich deshalb durch das Erreichen einer schnelleren und sicheren Kontrolle der Bauteile aus. Als die Lumineszenz anregende Beleuchtung eignet sich insbesondere ultraviolette Beleuchtung.

In den abhängigen Ansprüchen sind weitere vorteilhafte Maßnahmen aufgelistet.

Die in den abhängigen Ansprüchen aufgelisteten Maßnahmen können in vorteilhafter Art und Weise miteinander kombiniert werden.

Das Strahlmaterial mit lumineszierenden Eigenschaften lässt sich herstellen, indem ein nicht lumineszierendes Material mit einem die Lumineszenz hervorrufenden Aktivator dotiert wird, d. h., es umfasst einen Festkörper mit einem Wirtsgitter, in das ein Aktivator eingebettet ist. Der Aktivator wird derart ausgewählt, dass er sich aufgrund seines Ionenradius leicht in das Wirtsgitter einbauen lässt. Der Festkörper ist mit dem Aktivator dotiert, sodass durch Bestrahlung bspw. mit ultraviolettem Licht der Lumineszenzvorgang ausgelöst wird, der insbesondere durch elektronische Übergänge zwischen Energiezuständen des Aktivators hervorgerufen wird.

Das erfindungsgemäße Strahlmaterial mit lumineszierenden Eigenschaften ist mindestens ein Oxid, das mit mindestens einem Aktivator dotiert ist, mindestens ein Carbid, das mit mindestens einem Aktivator dotiert ist, mindestens ein Nitrid, das mit mindestens einem Aktivator dotiert ist, oder deren Gemische.

Das mindestens eine Oxid ist vorzugsweise ausgewählt aus der Gruppe Aluminiumoxid, Yttriumaluminiumgranat, Hexaaluminat, Zirkoniumoxid und Yttriumoxid. Das mindestens eine Carbid ist bevorzugt Siliciumcarbid. Das mindestens eine Nitrid ist bevorzugt ausgewählt aus der Gruppe, bestehend aus Bornitrid und Siliciumnitrid. Diese Materialien weisen die zum Strahlen erforderliche Härte auf.

In einer bevorzugten Ausführungsform ist der Aktivator mit einem Anteil von 0,0001 mol-% bis zu 10 mol-% in dem Wirtgitter enthalten. Noch bevorzugter beträgt der Anteil weniger als 5 mol-%, am meisten bevorzugt 1 mol-% oder weniger. Durch die Auswahl des geeigneten Aktivators und sein Anteil in dem Wirtsgitter kann die Lumineszenzintensität variiert werden.

Die Körnung des Strahlmaterials liegt bevorzugt zwischen 1 bis 100 µm.

Die vorstehenden Strahlmaterialien können bei Verfahren zum Strahlen von einkristallinen, polykristallinen und gerichtet erstarrten Legierungen eingesetzt werden.

Als Strahlmaterial mit lumineszierenden Eigenschaften kann beispielsweise Aluminiumoxid, insbesondere Korund, verwendet werden, das mit Ionen der Übergangsmetalle dotiert ist. Alternativ kann Yttriumaluminiumgranat eingesetzt werden, das mit Seltenerd-Ionen dotiert ist. Auch Hexaaluminat, das mit Seltenerd-Ionen dotiert ist, kann als erfindungsgemäßes Strahlmaterial Verwendung finden.

Die vorstehenden Oxide weisen die notwendige Härte für den Einsatzzweck des Strahlens. Sie bilden jeweils das Wirtsgitter, auf das der Aktivator derart abgestimmt ist, dass die jeweiligen thermischen und mechanischen Eigenschaften des Oxids nahezu unbeeinflusst sind und trotz Dotierung erhalten bleiben.

Ebenso kann als Strahlmaterial dotiertes Zirkoniumdioxid verwendet werden. Auch dotiertes Yttriumoxid kann als Strahlmaterial verwendet werden.

Die vorstehend genannten Strahlmaterialien können selbstverständlich auch in Gemischen eingesetzt werden.

Für Aluminiumoxid erweisen sich als Aktivator Übergangsmetallionen als vorteilhaft. Bevorzugte Übergangsmetallionen sind Cr³⁺, Mn²⁺, Au⁺, Ag⁺ oder Zn²⁺. Cr³⁺ hat sich als besonders vorteilhaft als Aktivator erwiesen.

Yttriumaluminiumgranat ist bevorzugt mit Seltenerd-Ionen, insbesondere Ce³⁺, Eu²⁺, Eu³⁺, Tb³⁺ oder deren Gemischen dotiert.

Als Aktivator für Hexaaluminat werden vorzugsweise Seltenerd-Ionen, insbesondere Ce³⁺, Eu²⁺, Eu³⁺, Tb³⁺, Pr³⁺, eingesetzt. Derartige Aktivatoren lassen sich aufgrund ihrer Ionenradien sehr gut in die Wirtsgitter einbauen.

Das Strahlmaterial kann durch verschiedene Verfahren wie beispielsweise das Mixed-Oxide-Verfahren, Solgel-Verfahren oder Fällungsverfahren hergestellt werden.

Das erfindungsgemäße Strahlmaterial wird bei einem herkömmlichen Strahlverfahren eingesetzt, um Beschichtungen von Bauteilen zu entfernen oder zu glätten oder die Grundwerkstoffoberfläche aufzurauen. Durch die Verwendung eines Strahlmaterials mit lumineszierenden Eigenschaften kann durch Bestrahlung des gestrahlten Bauteils mit bspw. ultraviolettem Licht relativ leicht festgestellt werden, ob Strahlmaterial in der Oberfläche des Bauteils verblieben ist, sodass Strahlrückstände leicht detektiert und anschließend entfernt werden können. Bei dem Bauteil handelt sich insbesondere um ein Turbinenbauteil, wie beispielsweise eine Turbinenschaufel oder eine Auskleidung der Brennkammer einer Gasturbine. Diese Bauteile können entweder neu hergestellt oder wiederaufgearbeitet sein.

Die Erfindung wird im Folgenden näher erläutert.
- Fig. 1: zeigt schematisch die Durchführung des erfindungsgemäßen Verfahrens.
- Fig. 2: zeigt schematisch die Detektion von Strahlmaterialrückstand auf einer Oberfläche eines Bauteils, das dem erfindungsgemäßen Verfahren unterzogen wurde.
- Fig. 3: zeigt beispielhaft eine Gasturbine in einem Längsteilschnitt.
- Fig. 4: zeigt in perspektivischer Ansicht eine Laufschaufel oder Leitschaufel einer Strömungsmaschine.
- Fig. 5: zeigt eine Brennkammer einer Gasturbine.

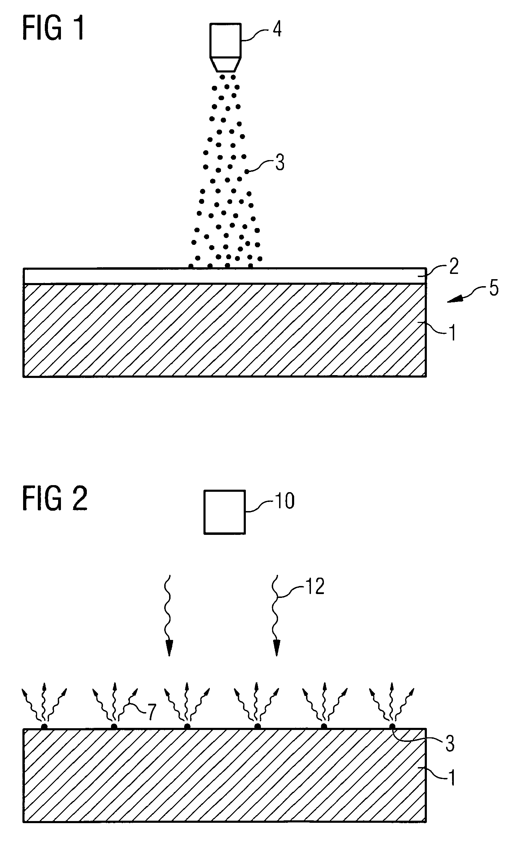

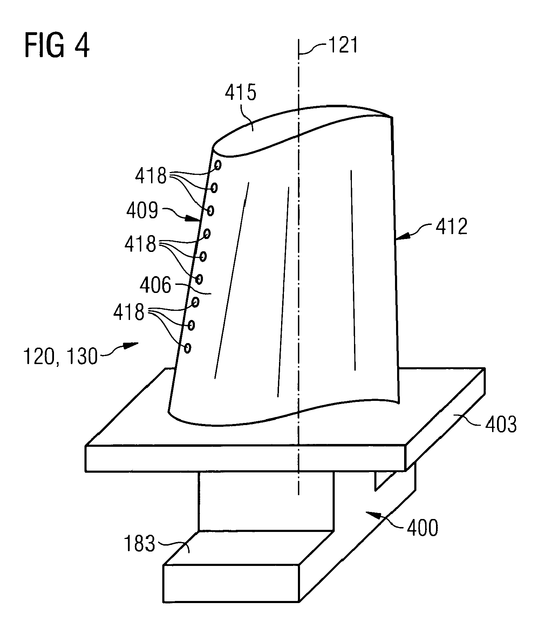

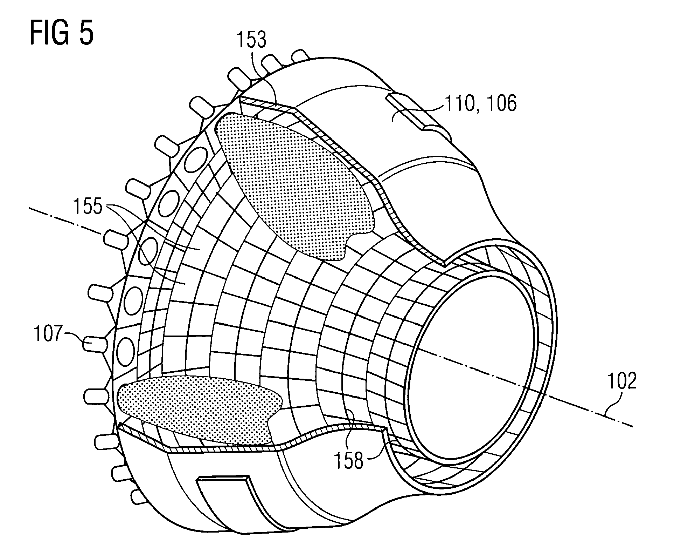

Figur 1 zeigt das Bauteil 5, das mit dem erfindungsgemäßen Verfahren behandelt wird. Das Bauteil 5 besteht aus einem Substrat 1 (Grundkörper), das insbesondere als Turbinenbauteil ausgebildet sein kann, sowie optional der Schutzschicht 2. Wenn die Schutzschicht 2 auf dem Substrat 1 vorhanden ist, kann sie durch das erfindungsgemäße Verfahren geglättet oder entfernt werden. Wenn die Schutzschicht 2 nicht auf dem Substrat 1 vorhanden ist, wird das Substrat 1 durch das erfindungsgemäße Verfahren aufgeraut. Das Bauteil 5 kann beispielsweise eine Leit- oder Laufschaufel (Fig. 4). Alternativ zur Ausbildung als Turbinenschaufel kann das Bauteil 5 auch ein Teil einer Brennkammerauskleidung (Fig. 5) einer Turbine sein.

Das Bauteil 5 wird im vorliegenden Ausführungsbeispiel mit einem Strahlmaterial 3 mit fluoreszierenden Eigenschaften behandelt. Ein erfindungsgemäßes Strahlmaterial 3 kann auf verschiedene Weisen hergestellt werden.

Ein Verfahren zur Herstellung eines erfindungsgemäßen Strahlmaterials 3 beruht auf einer Festkörperreaktion, beispielsweise dem sog. Mixed-Oxide-Verfahren. Beispielsweise werden zweckmäßige Mengen von Oxiden von dem Wirtsgitter-Festkörper und dem Aktivator miteinander gemischt. Die Mengen der verschiedenen Verbindungen werden so gewählt, dass die endgültige gewünschte Zusammensetzung des Strahlmaterials erzielt wird, wobei die Härte und die fluoreszierende Eigenschaft des Endprodukts eine Rolle spielen. Die Mischung wird bei einer Temperatur von 1000 °C bis 1500 °C, bevorzugt 1000 °C bis 1300 °C, gesintert. Das Sintern wird üblicherweise in einer sauerstoffhaltigen Atmosphäre, wie beispielsweise Sauerstoff, Luft oder einer Mischung von Sauerstoff und einem Inertgas, wie beispielsweise Stickstoff, Helium, Argon, Krypton und/oder Xenon, ausgeführt.

Beispielsweise werden Al₂O₃ und Cr₂O₃ in der gewünschten Menge gemischt und bei 1050 °C in einer Lufttemperatur gesintert, sodass das erhaltene erfindungsgemäße Strahlmaterial 3 1 mol-% Cr³⁺ enthält.

Alternativ kann das erfindungsgemäße Strahlmaterial 3 in einem nassen Verfahren, beispielsweise einem Fällungsverfahren, erzeugt werden. Eine oder mehr Verbindungen der Aktivatoren und Wirtgitter-Festkörper, wie beispielsweise Oxide, Nitrate, Sulfate, Acetate, Citrate, Chlorate, Perchlorate, Oxyhalogenide oder organische Verbindungen können eingesetzt werden. Diese wenigstens eine Verbindung sollte in einer wässerigen Lösung löslich sein, die gegebenenfalls sauer oder basisch sein kann. Die Ausgangsverbindungen des Aktivators und des Wirtsgitter-Festkörpers werden gemischt und in einer Säure, wie beispielsweise Salpetersäure, Schwefelsäure oder Salzsäure, gelöst. Die Stärke der Säurelosung wird so gewählt, dass die Verbindungen schnell gelöst werden. Eine Base, wie beispielsweise Ammoniumhydroxid, Ammoniumcarbonat oder Ammoniumoxalat, wird dann in Inkrementen zu der sauren Lösung gegeben, um eine Mischung der Hydroxide, die die gewünschten Verbindungen, auszufällen. Üblicherweise ist dieser Schritt abgeschlossen, wenn der pH-Wert der entstehenden Mischung größer 8 ist. Als Base kann ebenso eine organische Base, wie beispielsweise Methanolamin, Ethanolamin, Propanolamin, Dimethanolamin, Diethanolamin, Dipropanolamin, Trimethanolamin, Triethanolamin, oder Tripropanolamin verwendet werden. Die Ausfällung wird gefiltert, gewaschen und optional in Luft getrocknet. Die Ausfällung kann zur Dehydrierung des Materials in Luft zwischen etwa 400 °C und etwa 900 °C erwärmt werden. Die getrocknete Ausfällung wird in einer bevorzugt sauerstoffhaltigen Atmosphäre bei einer Temperatur in dem Bereich von 1000 °C bis 1500 °C, vorzugsweise von 1000 °C bis 1300 °C, gesintert.

Alternativ wird entweder der Aktivator oder der Wirtsgitter-Festkörper nicht in die Lösung zugesetzt, sondern in die Ausfällung als ein Pulver zugesetzt. Zur Herstellung des erfindungsgemäßen Strahlmaterials 3 wird die Mischung dann, wie oben beschrieben, gesintert.

Das erfindungsgemäße Strahlmaterial 3 wird in eine herkömmliche Strahlvorrichtung 4, die in Figur 1 nur schematisch dargestellt ist, gegeben, um das Bauteil 5 einem erfindungsgemäßen Strahlmaterialverfahren zu unterziehen.

In Fig. 2 ist die Detektion von Strahlmaterialrückständen gezeigt, die nach der Durchführung des erfindungsgemäßen Strahlverfahrens in der Oberfläche des Substrats 1 verblieben sind. Dabei findet eine Bestrahlung des gestrahlten Substrats 1 mit ultraviolettem Licht 12 einer UV-Lampe 10 statt. Durch das Bestrahlen der Oberfläche des Substrats 1 mit dem ultravioletten Licht 12 wird der Aktivator in dem erfindungsgemäßen Strahlmaterial 3 angeregt. Durch Absorption des Anregungslichts wird das Strahlmaterial zur Emission von Lumineszenzlicht 7 angeregt. Das emittierte Lumineszenzlicht 7 ist für den Betrachter mit bloßem Auge sichtbar. Natürlich ist es auch möglich das emittierte Licht 7 spektroskopisch zu detektieren und optional die Koordinaten von Strahlmittelrückständen auf der Oberfläche des Bauteils aufzuzeichnen.

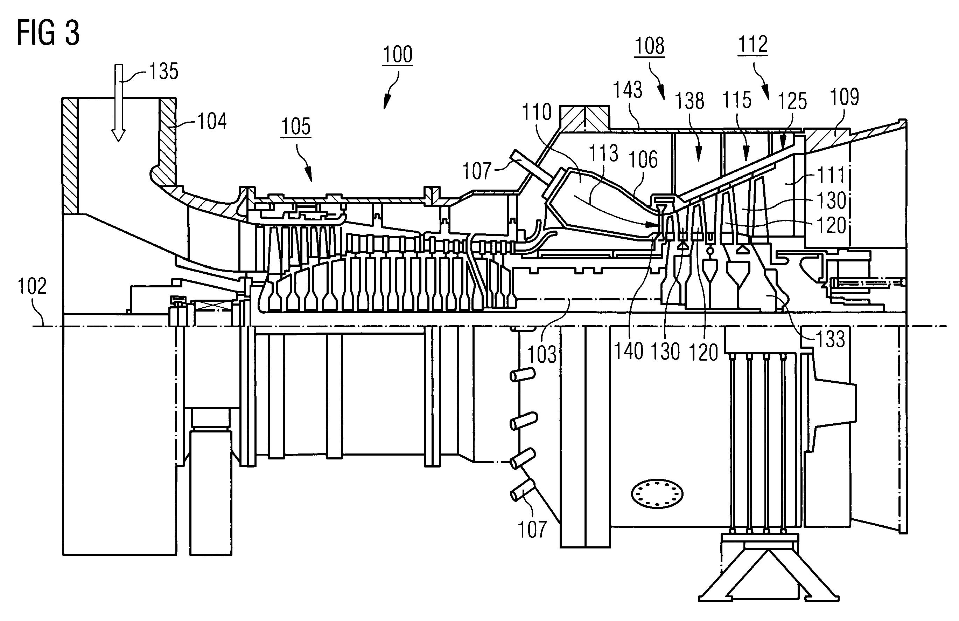

In den Figuren 3 bis 5 sind Bauteile gezeigt, die mit dem erfindungsgemäßen Verfahren behandelt werden können. Es hat sich gezeigt, dass das Verfahren gemäß der vorliegenden Erfindung insbesondere zur Anwendung bei Leit- oder Laufschaufeln, einer Brennkammerauskleidung oder ein anderes beschichtetes Bauteil einer Gasturbine geeignet ist.

Die Figur 3 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138, eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrAIX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium. Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der McrAlX-Schicht kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Bei der Herstellung von neuen Schaufeln 120, 130 werden die Grundkörper der Schaufeln 120, 130 vor dem Aufbringen der vorstehenden Schutzschichten durch das erfindungsgemäße Verfahren aufgeraut. Anschließend können die leicht detektierbaren Strahlmaterialrückstände entfernt werden, um eine kontaminationsfreie Oberfläche des Grundkörpers zur Verfügung zu stellen

Vor einer Reparatur der Schaufeln 120, 130 werden die vorstehenden Schutzschichten mit dem erfindungsgemäßen Verfahren entfernt, bevor neue Beschichtungen auf die Schaufeln 120, 130 aufgebracht werden. Bei der Ausführung des erfindungsgemäßen Strahlverfahrens kann sich Strahlmaterial in den Grundkörpern der Schaufeln 120,130 einlagern. Aufgrund der fluoreszierenden Eigenschaft des Strahlmaterials 3 kann das eingelagerte Material jedoch leicht detektiert und entfernt werden. Nach dem Entfernen dieser Einlagerungen werden dann die Risse in dem Grundkörper der Schaufeln 120, 130 repariert.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B-1, EP 1 306 454, EP 1 319 729 Al, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder stängelkristallinen Strukturen werden als Bauteile für Maschinen eingesetzt, die im Betrieb hohen mechanischen, thermischen und/oder chemischen Belastungen ausgesetzt sind. Die Fertigung von derartigen einkristallinen oder Stängelkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen. Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 Al bekannt; diese Schriften sind Teil der Offenbarung.

Wiederaufarbeitung (Refurbishment) bedeutet, dass Bauteile 120, 130 nach ihrem Einsatz gegebenenfalls von Schutzschichten befreit werden müssen. Dies erfolgt durch das erfindungsgemäße Verfahren. Danach erfolgt eine Entfernung der Strahlmaterialrückstände. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Bei Neufertigung wird die Brennkammerwand daher zur Aufrauung ihrer Oberfläche dem erfindungsgemäßen Verfahren unterzogen. Bei einer Reparatur bzw. Wiederaufarbeitung werden die Beschichtungen der Brennkammer durch das erfindungsgemäße Verfahren entfernt. Anschließend kann der detektierbare Strahlmaterialrückstand entfernt werden.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu ist zwischen der Brennkammerwand 153 und den Hitzeschildelementen 155 eine Anzahl von Temperatursensoren 158 positioniert.

## Patentansprüche

1. Verfahren zum Strahlen von Bauteilen,
bei dem das Strahlen unter Verwendung eines Strahlmaterials mit lumineszierenden Eigenschaften erfolgt.

2. Verfahren nach Anspruch 1,
**dadurch gekennzeichnet, dass**
das Strahlmaterial mit lumineszierenden Eigenschaften ausgewählt ist aus der Gruppe, bestehend aus mindestens einem Oxid, das mit mindestens einem Aktivator dotiert ist, mindestens einem Carbid, das mit mindestens einem Aktivator dotiert ist, mindestens einem Nitrid, das mit mindestens einem Aktivator dotiert ist, und deren Gemische.

3. Verfahren nach Anspruch 1 oder 2,
**dadurch gekennzeichnet, dass**
das mindestens eine Oxid ausgewählt ist aus der Gruppe, bestehend aus Aluminiumoxid, Yttriumaluminiumgranat, Hexaaluminat, Zirkoniumdioxid und Yttriumoxid, dass das mindestens eine Carbid ausgewählt ist aus der Gruppe, bestehend aus Siliciumcarbid, und dass das mindestens eine Nitrid ausgewählt ist aus der Gruppe, bestehend aus Bornitrid und Siliciumnitrid.

4. Verfahren nach Anspruch 2 oder 3,
**dadurch gekennzeichnet, dass**
der Anteil des Aktivators in dem Oxid bis zu 10 mol-%, bevorzugt weniger als 5 mol-%, beträgt.

5. Verfahren nach einem der Ansprüche 1 bis 4,
**dadurch gekennzeichnet, dass**
das Strahlmaterial mit einem Übergangsmetallion dotiertes Aluminiumoxid ist.

6. Verfahren nach Anspruch 5,
**dadurch gekennzeichnet, dass**
das Übergangsmetall Cr³⁺, Mn²⁺, Au⁺, Ag⁺ oder Zn²⁺ ist.

7. Verfahren nach einem der Ansprüche 2 bis 6,
**dadurch gekennzeichnet, dass**
das Strahlmaterial mit Cr³⁺ dotiertes Aluminiumoxid ist.

8. Verfahren nach Anspruch 7,
**dadurch gekennzeichnet,**
**dass** Aluminiumoxid mit 0,0001 bis 10 mol-%, bevorzugt weniger als 5 mol-%, Cr³⁺ dotiert ist.

9. Verfahren nach einem der Ansprüche 2 bis 4,
**dadurch gekennzeichnet, dass**
das mindestens eine Oxid ausgewählt ist aus der Gruppe, bestehend aus Yttriumaluminiumgranat und Hexaaluminat, und der mindestens eine Aktivator mindestens ein Seltenerd-Ion ist.

10. Verfahren nach Anspruch 9,
**dadurch gekennzeichnet, dass**
das mindestens eine Oxid Yttriumaluminiumgranat ist, und das mindestens eine Seltenerd-Ion ausgewählt ist aus der Gruppe, bestehend aus Ce³⁺, Eu²⁺, Eu³⁺, Tb³⁺ oder deren Gemischen.

11. Verfahren nach Anspruch 9,
**dadurch gekennzeichnet, dass**
das mindestens eine Oxid Hexaaluminat ist, und das mindestens eine Seltenerd-Ion ausgewählt ist aus der Gruppe, bestehend aus Ce³⁺, Eu²⁺, Eu³⁺, Tb³⁺, Pr³⁺ oder deren Gemischen.

12. Verfahren nach Anspruch 3, 5, 7 oder 8,
**dadurch gekennzeichnet, dass**
das Aluminiumoxid Korund ist.

13. Verfahren nach einem der Ansprüche 1 bis 12,
**dadurch gekennzeichnet, dass**
das Bauteil nach dem Strahlen mit die Lumineszenz anregender Strahlung bestrahlt wird.

14. Verfahren nach einem der Ansprüche 1 bis 13,
**dadurch gekennzeichnet, dass**
das Bauteil ein Turbinenbauteil ist.

15. Strahlmaterial, das ein Wirtsgitter mit einer für das Durchführen eines Strahlverfahrens geeigneten Härte und ein in das Wirtsgitter eingebrachtes Material mit lumineszierenden Eigenschaften aufweist.

16. Strahlmaterial nach Anspruch 15,
ausgewählt aus der Gruppe, bestehend aus mindestens einem Oxid, mindestens einem Carbid, mindestens einem Nitrid oder deren Gemische als Wirtsgitter, das mit mindestens einem Aktivator als eingebrachtes Material dotiert ist.

17. Strahlmaterial nach Anspruch 16,
**dadurch gekennzeichnet, dass**
das mindestens eine Oxid ausgewählt ist aus der Gruppe, bestehend aus Aluminiumoxid, Yttriumaluminiumgranat, Hexaaluminat, Zirkoniumoxid und Yttriumoxid, das mindestens eine Carbid ausgewählt ist aus der Gruppe, bestehend aus Siliciumcarbid, und dass das mindestens eine Nitrid ausgewählt ist aus der Gruppe, bestehend aus Bornitrid und Siliciumnitrid.

18. Strahlmaterial nach Anspruch 16 oder 17,
**dadurch gekennzeichnet, dass**
der Anteil des Aktivators in dem mindestens einem Oxid, mindestens einem Carbid, mindestens einem Nitrid oder deren Gemische bis zu 10 mol-%, bevorzugt weniger 5 mol-%, beträgt.

19. Strahlmaterial nach einem der Ansprüche 15 bis 18,
**dadurch gekennzeichnet, dass**
das Strahlmaterial mit Übergangsmetallionen dotiertes Aluminiumoxid ist.

20. Strahlmaterial nach Anspruch 19,
**dadurch gekennzeichnet, dass**
das Übergangsmetall Cr³⁺, Mn²⁺, Au⁺, Ag⁺ oder Zn²⁺ ist.

21. Strahlmaterial nach einem der Ansprüche 15 bis 20,
**dadurch gekennzeichnet, dass**
das Strahlmaterial mit Cr³⁺ dotiertes Aluminiumoxid ist.

22. Strahlmaterial nach Anspruch 21,
**dadurch gekennzeichnet,**
**dass** Aluminiumoxid mit 0,0001 bis 10 mol-%, bevorzugt weniger als 5 mol-%, Cr³⁺ dotiert ist.

23. Strahlmaterial nach einem der Ansprüche 16 bis 18,
**dadurch gekennzeichnet, dass**
das mindestens eine Oxid ausgewählt ist aus der Gruppe, bestehend aus Yttriumaluminiumgranat und Hexaaluminat, und der Aktivator mindestens ein Seltenerd-Ion ist.

24. Strahlmaterial nach Anspruch 23,
**dadurch gekennzeichnet, dass**
das mindestens eine Oxid Yttriumaluminiumgranat ist, und
das mindestens eine Seltenerd-Ion ausgewählt ist aus der Gruppe, bestehend aus Ce³⁺, Eu²⁺, Eu³⁺, Tb³⁺ oder deren Gemischen.

25. Strahlmaterial nach Anspruch 23,
**dadurch gekennzeichnet, dass**
das mindestens eine Oxid Hexaaluminat ist, und
das mindestens eine Seltenerd-Ion ausgewählt ist aus der Gruppe, bestehend aus Ce³⁺, Eu²⁺, Eu³⁺, Tb³⁺, Pr³⁺ deren Gemischen.
